# EUROPÄISCHE PATENTSCHRIFT

(11) **EP 0 922 897 B1**
(45) Veröffentlichungstag und Bekanntmachung des Hinweises auf die Patenterteilung: **14.05.2003**
(21) Anmeldenummer: 98123578.1
(22) Anmeldetag: 10.12.1998
(51) Int. Cl.: F16L 23/16, F16J 15/12

(54) **Kraftnebenschlussdichtung zur Abdichtung von Flansch- bzw. Rohrleitungsverbindungen**
Sealing arrangement for flanges and pipe connections
Dispositif d'étanchéité pour brides et connexions de tuyaux

(30) Priorität: 12.12.1997 DE 19755318
(43) Veröffentlichungstag der Anmeldung: 16.06.1999
(73) Patentinhaber: IBK Wiesehahn GmbH, 46244 Bottrop (DE)
(72) Erfinder: Siebler, Dietmar, 44625 Herne (DE); Wiesehahn, Birgit, 46244 Bottrop (DE)
(74) Vertreter: Lelgemann, Karl-Heinz, Dipl.-Ing.

(56) Entgegenhaltungen:
- WO-A-96/28671
- DE-A- 2 514 281
- DE-A- 4 139 453
- DE-U- 9 317 130
- US-A- 4 671 325

## Beschreibung

Die Erfindung bezieht sich auf eine Kraftnebenschlußdichtung nach dem Oberbegriff des Patentanspruchs 1.

Mit einer derartigen Kraftnebenschlußdichtung wird vermieden, daß äußere Lasten durch das eigentliche Dichtmaterial übertragen werden müssen. Ein Überschreiten der Standfestigkeit des Dichtmaterials, Plastifizierung und Kriechen desselben sowie der Abbau der zur Aufrechterhaltung der Dichtwirkung erforderlichen Vorspannung wird mit derartigen Kraftnebenschlußdichtungen vermieden. Die Kräfte und Momente werden über das Hartmaterialprofil weitergeleitet, so daß ein Überpressen des eigentlichen Dichtmaterials ausgeschlossen ist.

Um bei der Montage der Kraftnebenschlußdichtung und der Flansch- bzw. Rohrleitungsverbindung, zu deren Abdichtung die Kraftnebenschlußdichtung dienen soll, sicherzustellen, daß bei einer definierten Dicke der Dichtmaterialauflage eine maximale Verdichtung des Dichtmaterials erreicht wird, werden beim Ausdrehen der Auflagenuten im Hartmaterialprofil maximale Toleranzen angestrebt. Hierbei wird ein geringfügiges Fließen des Dichtmaterials, insbesondere wenn als Dichtmaterial Graphitmaterial eingesetzt wird, eher zugelassen, als eine nicht optimale Verdichtung des Dichtmaterials.

Aus der WO-A-96 28 671 und der DE-A-41 39 453 ist eine Kraftnebenschlußdichtung zur Abdichtung von Flansch- bzw. Rohrleitungsverbindungen bekannt, die ein Hartmaterialprofil, dessen Querschnitt auf den den Dichtleisten der Flansch- bzw. Rohrleitungsverbindung zugewandten Abdichtflächen jeweils eine Auflagenut aufweist, und Dichtmaterialauflagen hat, von denen jeweils eine in jede Auflagenut des Hartmaterialprofils aufgenommen ist, wobei an der inneren und der äußeren Seitenwandung zumindest einer der Auflagenuten eine Schneide ausgebildet ist.

Die Schneide bzw. die Schneiden dieser bekannten Kraftnebenschlußdichtung dienen dazu, im Zusammenwirken mit den Gegenflächen der Dichtleisten der Flansch- bzw. Rohrleitungsverbindung eine Einkammerung der Dichtmaterialauflagen zu bewerkstelligen. Hierzu dringen diese Schneiden in die entsprechenden Gegenflächen der Dichtleisten der Flansch- bzw. Rohrleitungsverbindungen ein.

Der Erfindung liegt die Aufgabe zugrunde, die eingangs geschilderte Kraftnebenschlußdichtung derart weiterzubilden, daß ein etwaiges Fließen des Dichtmaterials beim Erstellen der mit der Kraftnebenschlußdichtung versehenen Flansch- bzw. Rohrleitungsverbindung auch bei einer etwaigen Schrägstellung der Flansche, bei einem ungleichmäßigen Anziehen der Schrauben der Flansch- bzw. Rohrleitungsverbindung, bei unebenen Flanschoberflächen oder bei unsachgemäßer Handhabung nicht dazu führt, daß aufgrund überschüssigen Dichtmaterials der korrekte Zusammenbau der Flansch- bzw. Rohrleitungsverbindung mit der erfindungsgemäßen Kraftnebenschlußdichtung beeinträchtigt wird.

Diese Aufgabe wird erfindungsgemäß durch die Merkmale im kennzeichnenden Teil des Patentanspruchs 1 gelöst. Durch die Wirkung der Schneide in Verbindung mit der ihr zugeordneten Aufnahmerinne wird sichergestellt, daß etwaiges überschüssiges Dichtmaterial ohne irgendwelche Störungen an den Kontaktflächen zwischen der Kraftnebenschlußdichtung und den Flanschen aufgenommen werden kann.

Zur sicheren und korrekten Positionierung der Dichtmaterialauflage in der Auflagenut ist es zweckmäßig, wenn die Bodenfläche der Auflagenut von in Breitenrichtung der Auflagenut aufeinanderfolgenden dreieckigen Vorsprüngen gebildet wird. Bei der Montage der Flansch- bzw. Rohrleitungsverbindung und der Kraftnebenschlußdichtung ergibt sich sodann ein fester Eingriff zwischen der Auflagenut und der Dichtmaterialauflage.

Um in jedem Fall die vollständige Abdichtwirkung der Dichtmaterialauflage zu erhalten, ist es vorteilhaft, wenn die Höhe der dreieckigen Vorsprünge niedriger ist als die Tiefe der Auflagenut; hierdurch wird vermieden, daß die Spitzen der dreieckigen Vorsprünge in Kontakt mit der jeweiligen Dichtleiste des Flansches geraten.

Dahingegen können die Schneiden als dreieckige Vorsprünge ausgebildet sein, deren Höhe etwa der Tiefe der Auflagenut entspricht, um in jedem Fall sicherzustellen, daß etwaiges überschüssiges Dichtmaterial von der eigentlichen Dichtmaterialauflage abgetrennt wird.

Die die Bodenfläche der Auflagenut bzw. die Schneiden bildenden dreieckigen Vorsprünge können einen gleichschenkligen, rechtwinkligen Querschnitt aufweisen, wobei der rechte Winkel an der freien Spitze des dreieckigen Vorsprungs angeordnet sein sollte.

Wie bereits erwähnt, wird bei der Montage der Kraftnebenschlußdichtung und der Flansch- bzw. Rohrleitungsverbindung ein geringfügiges Fließen des Dichtmaterials in Kauf genommen, um eine optimale Verdichtung desselben in jedem Fall zu erreichen. Um sicherzustellen, daß die Flansch- bzw. Rohrleitungsverbindung mit Schrauben einer vergleichsweise geringen Schraubengüte realisiert werden kann, ist es vorteilhaft, wenn die Breite der Auflagenut bzw. der Dichtmaterialauflage weniger als 50 % der Breite der Kraftnebenschlußdichtung beträgt. Hierdurch kann die für die Dichtpressung der Flansch- bzw. Rohrleitungsverbindung erforderliche Schraubenkraft in einem Maße herabgesetzt werden, welches die geringere Schraubengüte zuläßt.

Beim Einsatz von vergleichsweise breiten Kraftnebenschlußdichtungen hat sich herausgestellt, daß eine ausreichende Dichtwirkung erzielbar bleibt, wenn die Breite der Auflagenut bzw. der Dichtmaterialauflage ca. 31,25 % (5/16) der Breite der Kraftnebenschlußdichtung beträgt.

Bei etwas geringer dimensionierten Kraftnebenschlußdichtungen wird eine ausreichende Dichtwirkung erreicht, wenn die Breite der Auflagenut bzw. der Dichtmaterialauflage ca. 30 % (3/10) der Breite der Kraftnebenschlußdichtung beträgt. Durch die vorstehend geschilderte Reduzierung des Verhältnisses zwischen der Breite der Dichtmaterialauflage und der Breite der Kraftnebenschlußdichtung insgesamt wird aufgrund des möglichen Einsatzes von Schrauben mit einer preiswerteren Schraubengüte einerseits eine erhebliche Kostenersparnis erzielbar; zum anderen kann die Kraftnebenschlußdichtung mit dem genannten Breitenverhältnis in Flansch- bzw. Rohrleitungsverbindungen eingesetzt werden, deren konstruktiver Aufbau nur Schrauben mit einer bestimmten Schraubenkraft zuläßt.

Um eine exzentrische und damit unsachgemäße Montage der erfindungsgemäßen Kraftnebenschlußdichtung zu erschweren, ist es vorteilhaft, wenn die Kraftnebenschlußdichtung einen vom Hartmaterialprofil radial auswärts vorragenden Zentrierrand aufweist, dessen Außendurchmesser dem Abstand einander diametral gegenüberliegender Schrauben der Flansch- bzw. Rohrleitungsverbindung entspricht. Sofern die derart gestaltete erfindungsgemäße Kraftnebenschlußdichtung nicht konzentrisch zur Flansch- bzw. Rohrleitungsverbindung angeordnet wird, steht dieser Zentrierrand in die Verschraubungen der Flansch- bzw. Rohrleitungsverbindung vor und verhindert die Montage.

Wenn die derart gestaltete Kraftnebenschlußdichtung darüber hinaus Zentrierhaken aufweist, die vom Außenumfang des Zentrierrands radial auswärts vorstehen und eine Außenkante der Flansch- bzw. Rohrleitungsverbindung umgreifen, ist zum einen eine vergleichsweise einfache Montage der erfindungsgemäßen Kraftnebenschlußdichtung ermöglicht, wobei darüber hinaus ein exzentrischer Sitz derselben in der Flansch- bzw. Rohrleitungsverbindung zuverlässig ausgeschlossen ist.

Zur Erzielung der optimalen Abdichtwirkung mit Hilfe der erfindungsgemäßen Kraftnebenschlußdichtung ist es zweckmäßig, wenn jede Dichtmaterialauflage vor der Montage der Flänsch- bzw. Rohrleitungsverbindung soweit aus der Auflagenut vorsteht, daß sie nach der Montage der Flansch- bzw. Rohrleitungsverbindung vollständig in der Auflagenut angeordnet ist und ihr volles Rückfederungsvermögen aufweist und jede Dichtleiste der Flansch- bzw. Rohrleitungsverbindung am Hartmaterialprofil anliegt. Der Flansch erreicht somit im Einbauzustand unmittelbar nach der Montage eine Abstützung seiner Dichtleiste auf dem Hartmaterialprofil der Kraftnebenschlußdichtung, wodurch eine sog. Blocklage erreicht wird. Die Dichtmaterialauflage ist in der Auflagenut gekammert und wird nur zur Realisierung der Dichtheitsfunktion der Kraftnebenschlußdichtung herangezogen.

Gemäß einer vorteilhaften Ausführungsform der erfindungsgemäßen Kraftnebenschlußdichtung ist das Hartmaterialprofil aus Edelstahl hergestellt, wobei 1.4571-, 1.4828- und 1.4876-Edelstahl zum Einsatz kommen kann. Die maximal zulässige Flächenpressung der erfindungsgemäßen Kraftnebenschlußdichtung wird durch die Festigkeitswerte des das Hartmaterialprofil bildenden Werkstoffs bestimmt, da, wie vorstehend erwähnt, das die Dichtmaterialauflage bildende eigentliche Dichtmaterial gekammert ist und damit im Kraftnebenschluß liegt.

Als geeigneter Werkstoff für die Dichtmaterialauflage der erfindungsgemäßen Kraftnebenschlußdichtung hat sich Graphit erwiesen, wobei aufgrund des Einsatzes dieses Werkstoffs eine Temperaturbeständigkeit bis zu 500 Grad C, eine hohe Medienbeständigkeit, z.B. gegen Wasser und Dampf, und eine hohe Montagesicherheit erzielbar sind. Die Druckbeständigkeitseigenschaften sind ebenfalls gut, da dieser Werkstoff hochverdichtbar und mit guten Rückfederungseigenschaften kompressibel ist, wobei hierbei 17 % der Ausgangsdicke realisierbar erscheinen.

Bei Einsatz in nuklearen Anlagen sollte das Graphit eine Reinheit von mindestens 99,8 % bei einem Aschegehalt von maximal 0,2 %, einem Chloridanteil von maximal 20 ppm und einem Summenanteil von Chlor und Fluor von maximal 100 ppm aufweisen. Für andere Einsatzfälle ist eine Reinheit von ca. 98 % bei einem Aschegehalt von ca. 2 % und einem Chloridanteil von maximal 50 ppm ausreichend.

Die Ausgangs-Rohdichte des Graphits sollte ca. 1,0 g/cm3 betragen.

Wenn die erfindungsgemäße Kraftnebenschlußdichtung in Flansch- bzw. Rohrleitungsverbindungen zum Einsatz kommt, bei denen sie mit Graphit reagierenden Medien, z.B. Ammoniak, ausgesetzt ist, ist es vorteilhaft, die Dichtmaterialauflage aus einem asbestfreien Faserverbundwerkstoff, aus einem PTFE-Werkstoff oder aus einer Werkstoffmischung auf Glimmerbasis auszubilden.

Als Faserverbundwerkstoffe können hierbei insbesondere kautschukgebundene asbestfreie Faserverbundwerkstoffe zum Einsatz kommen, z.B. Aramidfaser-NBR-gebunden, Synthetikfaser-NBR-gebunden, Carbonfaser-NBR-gebunden oder Glasfaser-NBR-gebunden.

Hierbei können auch als Stahlarmierung od.dgl. ausgebildete Abwandlungen der Aramid-, Synthetik-, Carbon- oder Glasfaser als Werkstoff vorgesehen sein.

Als geeigneter PTFE-Werkstoff für die Dichtmaterialauflage hat sich insbesondere FEP erwiesen.

Sofern eine Temperaturbeständigkeit des Werkstoffs für die Dichtmaterialauflage oberhalb von 600 Grad C erforderlich ist, ist die erwähnte Werkstoffmischung auf Glimmerbasis einsetzbar, wobei diese einen Mineralanteil von zumindest 90 % und einen Bindemittelgehalt von maximal 10 % aufweisen sollte. Dieser Werkstoff hat eine hohe Temperaturbeständigkeit bis zu 1000 Grad C, ist absolut unbrennbar, hat einen hohen Elastizitätsmodul, eine gute Kompressibilität und Verdichtbarkeit sowie ein gutes Rückfederungsvermögen; er ist beständig gegen Chemikalien und hat eine hohe Lichtbogenund Koronabeständigkeit. Im Zusammenwirken mit einem hitzestabilen Bindemittel ist er somit für heißgasführende Bauteile geeignet. Darüber hinaus ist er hydrolysebeständig. Außerdem handelt es sich um ein asbestfreies Naturprodukt.

Bei bestimmten erhöhten Anforderungen können in Radialrichtung der Flansch- bzw. Rohrleitungsverbindung mehrere, z.B. zwei, vorstehend geschilderte Dichtungen aufeinanderfolgen.

Im folgenden wird die Erfindung an Hand einer Ausführungsform unter Bezugnahme auf die Zeichnung näher erläutert.

Es zeigen:
- Figur 1: eine Prinzipdarstellung im Schnitt einer Flansch- bzw. Rohrleitungsverbindung mit einer erfindungsgemäßen Kraftnebenschlußdichtung;
- Figur 2: eine Schnittdarstellung einer Ausführungsform einer erfindungsgemäßen Kraftnebenschlußdichtung vor der Montage derselben;
- Figur 3: eine Figur 2 entsprechende Darstellung nach der Montage; und
- Figur 4: eine Draufsicht auf eine sich auf einer Dichtleiste eines Flansches befindenden erfindungsgemäßen Kraftnebenschlußdichtung.

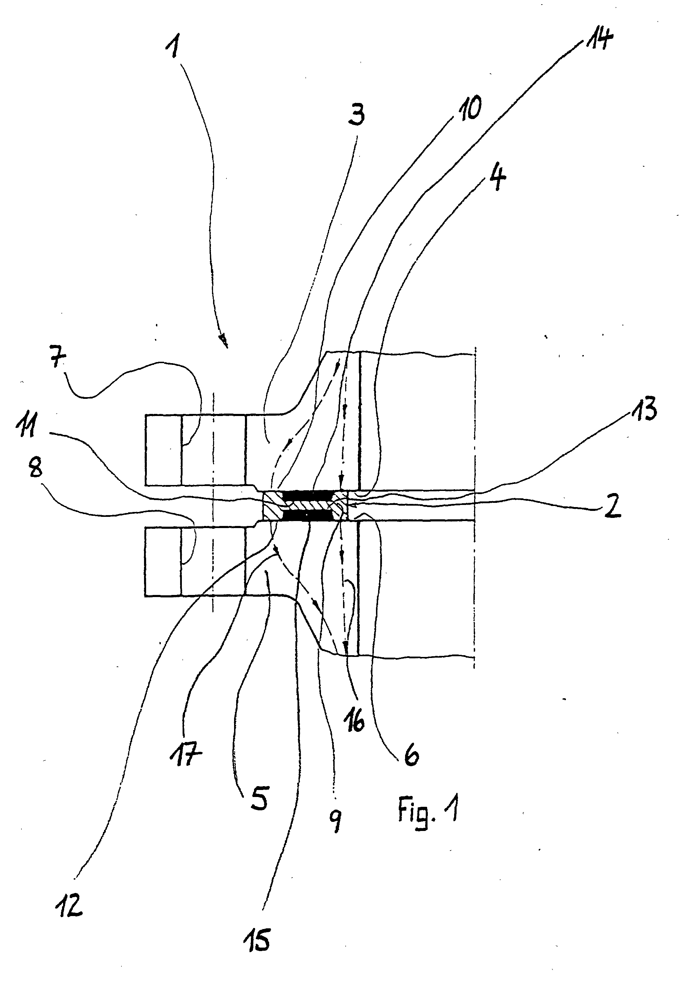

Eine in Figur 1 prinzipiel dargestellte Flansch- bzw. Rohrleitungsverbindung 1 ist mit einer erfindungsgemäßen Kraftnebenschlußdichtung 2 versehen, welche zwischen einem oberen Flansch 3 bzw. dessen Dichtleiste 4 und einem unteren Flansch 5 bzw. dessen Dichtleiste 6 der Flansch- bzw. Rohrleitungsverbindung im Preßsitz angeordnet ist.

Die Aufbringung der Preßkräfte erfolgt durch in Figur 1 nicht dargestellte Schrauben, welche die in den Flanschen 3 und 5 ausgebildeten Schrauböffnungen 7 und 8 durchdringen.

Die Kraftnebenschlußdichtung 2 hat ein Hartmaterialprofil 9, welches aus Edelstahl hergestellt ist. Das Hartmaterialprofil 9 hat in der in Figur 1 oberen Abdichtfläche 10, die in Druckanlage an der Dichtleiste 4 des oberen Flansches 3 ist, eine obere Auflagenut 11 und entsprechend in der der Dichtleiste 6 des unteren Flansches 5 zugeordneten unteren Abdichtfläche 12 eine untere Auflagenut 13.

Sowohl in der oberen Auflagenut 11 als auch in der unteren Auflagenut 13 des Hartmaterialprofils 9 der Kraftnebenschlußdichtung 2 ist eine Dichtmaterialauflage 14 bzw. 15 angeordnet.

Im montierten Zustand sind die beiden Dichtmaterialauflagen 14, 15 innerhalb der oberen 11 bzw. unteren Auflagenut 13 gekammert, da die Dichtleisten 4, 6 der Flansche 3, 5 jeweils am Hartmaterialprofil 9 anliegen. Wie durch die gestrichelten Pfeillinien 16 und 17 in Figur 1 dargestellt, erfolgt die Übertragung von Kräften und Momenten durch die erfindungsgemäße Kraftnebenschlußdichtung 2 durch deren Hartmaterialprofil 9, wohingegen die beiden Dichtmaterialauflagen 14, 15 ausschließlich die Dichtfunktionen der Kraftnebenschlußdichtung 2 erfüllen. Hierzu ist es zweckmäßig, wenn die beiden Dichtmaterialauflagen 14, 15 vor der Montage der erfindungsgemäßen Kraftnebenschlußdichtung soweit aus der oberen 11 bzw. der unteren Auflagenut 13 vorstehen, daß sie nach der Montage der Flansch- bzw. Rohrleitungsverbindung 1 maximal zusammengepreßt sind.

Als Werkstoff für die Dichtmaterialauflagen 14, 15 kann Graphit mit einer Reinheit von ca. 98 % bei einem Aschegehalt von ca. 2 % und einem Chloridanteil von maximal 50 ppm dienen, dessen Ausgangs-Rohdichte etwa 1,0 g/cm3 beträgt. Es sind auch Ausgangsrohdichten bis zu 1,6 g/cm3 möglich.

Desweiteren ist als Werkstoff für die Dichtmaterialauflagen 14, 15 ein asbestfreier, kautschukgebundener Faserverbundwerkstoff einsetzbar, bei dem es sich z.B. um Aramidfaser-NBR-gebunden, Synthetikfaser-NBR-gebunden, Carbonfaser-NBR-gebunden oder Glasfaser-NBR-gebunden handeln kann; auch als Stahlarmierung o.dgl. ausgebildete Abwandlungen der Aramid-, Synthetik-, Carbon- oder Glasfaser sind als Werkstoff einsetzbar.

Desweiteren können auch PTFE-Werkstoffe, z.B. FEP, für die Herstellung der Dichtmaterialauflagen 14, 15 zum Einsatz kommen.

Bei besonders hinsichtlich der Temperaturbeständigkeit hohen Anforderungen an die erfindungsgemäße Kraftnebenschlußdichtung 2 können die Dichtmaterialauflagen 14, 15 aus einer Werkstoffmischung auf Glimmerbasis hergestellt werden, die einen Mineralanteil von zumindest 90 % und einen Bindemittelgehalt von maximal 10 % aufweist.

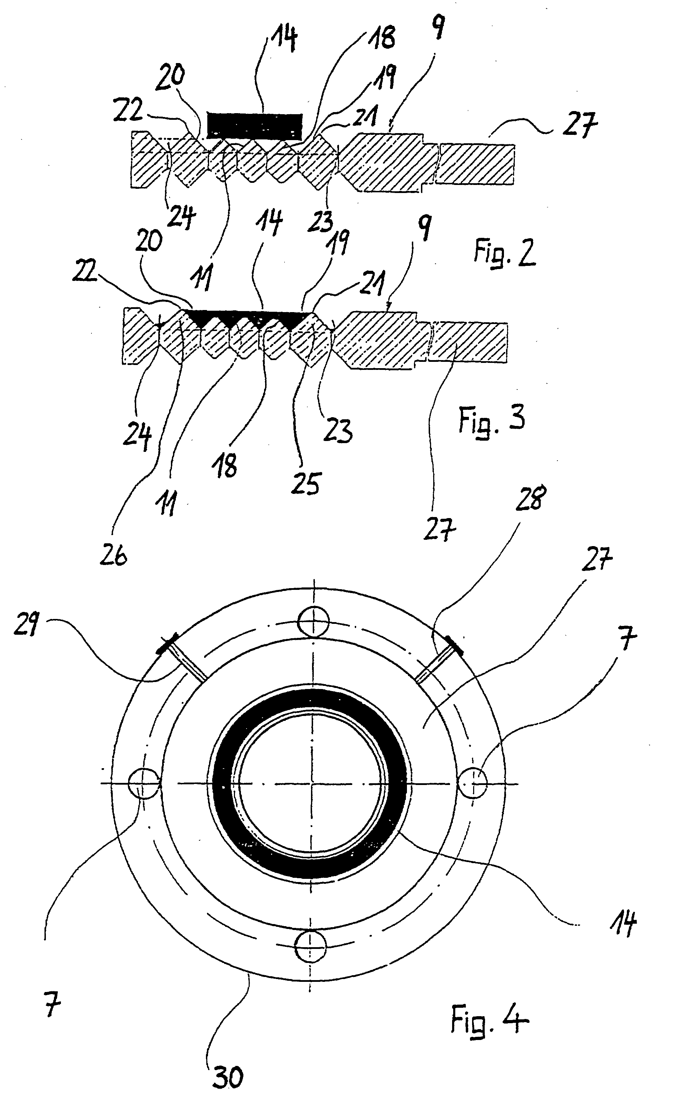

Die erfindungsgemäße Kraftnebenschlußdichtung 2 kann, wie in Figur 4 dargestellt, rund sein, es sind jedoch auch andere Umfangsformen, z.B. Rechteckumfang o.dgl., möglich.

In Figur 2 ist im Querschnitt eine Ausführungsform der erfindungsgemäßen Kraftnebenschlußdichtung 2 vor der Montage der Flansch- bzw. Rohrleitungsverbindung 1 dargestellt. Die Bodenfläche der oberen Auflagenut 11 des Hartmaterialprofils 9 weist dreieckige Vorsprünge 18 auf, welche bei der Montage der Kraftnebenschlußdichtung 2, wie prinzipiell in Figur 3 dargestellt ist, in die obere Dichtmaterialauflage 14 eindringen. An dieser Stelle sei darauf hingewiesen, daß in den Figuren 2 und 3 lediglich die obere Dichtmaterialauflage 14 dargestellt ist; entsprechende Vorgänge finden auch im Zusammenhang mit der unteren Dichtmaterialauflage 15 statt, die lediglich in Figur 1 dargestellt ist.

Durch das Eindringen der dreieckigen Vorsprünge 18 in die. obere Dichtmaterialauflage 14 wird die obere Dichtmaterialauflage 14 fest innerhalb der oberen Auflagenut 11 positioniert bzw. fixiert. Um zu vermeiden, daß die dreieckigen Vorsprünge 18 bei der Montage der Kraftnebenschlußdichtung 2 oder im darauf folgenden Betrieb die obere Dichtmaterialauflage 14 durchdringen, ist die Höhe der dreieckigen Vorsprünge 18 geringer als die Tiefe der oberen Auflagenut 11.

An der Oberkante der inneren Seitenwandung 20 sowie an der Oberkante der äußeren Seitenwandung 19 ist jeweils eine scharfkantige Schneide 22 bzw. 21 ausgebildet, denen jeweils eine Aufnahmerinne 24 bzw. 23 zugeordnet ist.

Da während der Montage der Flansch- bzw. Rohrleitungsverbindung 1 ein Fließen des die Dichtmaterialauflagen 14, 15 ausbildenden Werkstoffs in Kauf genommen wird, insbesondere wenn es sich bei diesem Werkstoff um Graphit handelt, wird mittels der Schneiden 21 bzw. 22 überschüssiges Dichtmaterial von der Dichtmaterialauflage 14 separiert und in die Aufnahmerinnen 23 bzw. 24 abgeleitet, in denen das überschüssige Dichtmaterial keinerlei negative Auswirkungen an den Übergangsflächen zwischen der Kraftnebenschlußdichtung und den Flanschen 3, 5 der Flansch- bzw. Rohrleitungsverbindung 1 hat.

Die Schneiden 21, 22 sind ebenfalls mittels dreieckiger Vorsprünge 25, 26 ausgebildet, wobei die Schneiden 21 bzw. 22 etwa in der Ebene der Abdichtflächen 10, 12 des Hartmaterialprofils 9 angeordnet sind.

Bei der in den Figuren 2 bis 4 dargestellten Ausführungsform der erfindungsgemäßen Kraftnebenschlußdichtung 2 hat diese bzw. deren Hartmaterialprofil 9 einen Zentrierrand 27, dessen Außendurchmesser dem Abstand zwischen zwei diametral einander gegenüberliegenden Schrauböffnungen 7 der Flansch- bzw. Rohrleitungsverbindung 1 entspricht. Hierdurch ist bei einer exzentrischen Anordnung der Kraftnebenschlußdichtung 2 keine Montage der Flansch- bzw. Rohrleitungsverbindung 1 möglich, da der Zentrierrand 27 dann in einige Schrauböffnungen 7 vorstünde.

Zur weiteren Vereinfachung der Montage ist es, wie in Figur 4 dargestellt, vorteilhaft, wenn am Zentrierrand 27 radial vorstehende Zentrierhaken 28, 29 vorgesehen sind, die eine Außenkante 30 der Flansch- bzw. Rohrleitungsverbindung 1 umgreifen.

Die Breite der Dichtmaterialauflagen 14, 15 im Verhältnis zu der Gesamtbreite des Hartmaterialprofils 9 der Kraftnebenschlußdichtung 2 kann bei vergleichsweise großen Dichtungen ca. 31,25 und bei vergleichsweise kleinen Dichtungen ca. 30 % betragen. Hierdurch wird der Einsatz vergleichsweise geringer Schraubengüten bei der Herstellung der Flansch- bzw. Rohrleitungsverbindung 1 ermöglicht.

## Patentansprüche

1. Kraftnebenschlußdichtung zur Abdichtung von Flansch- bzw. Rohrleitungsverbindungen (1), mit einem Hartmaterialprofil (9), dessen Querschnitt auf den den Dichtleisten (4, 6) der Flansch- bzw. Rohrleitungsverbindung (1) zugewandten Abdichtflächen (10, 12) jeweils eine Auflagenut (11, 13) aufweist, und Dichtmaterialauflagen (14, 15), von denen jeweils eine in jeder Auflagenut (11, 13) des Hartmaterialprofils (9) aufgenommen ist, wobei daß an der inneren (20) und/oder der äußeren Seitenwandung (19) zumindest einer, vorzugsweise jeder, Auflagenut (11, 13) eine Schneide (22, 21) ausgebildet ist, **dadurch gekennzeichnet, daß** mittels der Schneide (22, 21) beim Zusammenbau der Flansch- bzw. Rohrleitungsverbindung (1) mit der Kraftnebenschlußdichtung (2) überschüssiges Material der Dichtmaterialauflage (14, 15) abtrennbar ist und daß der Schneide (22, 21) auf ihrer der Auflagenut (11, 13) abgewandten Seite eine Aufnahmerinne (24, 23) zugeordnet ist, in der das abgetrennte überschüssige Material der Dichtmaterialauflage (14, 15) aufnehmbar ist.

2. Kraftnebenschlußdichtung nach Anspruch 1, bei der die Bodenfläche der Auflagenut (11, 13) von in Breitenrichtung der Auflagenut (11, 13) aufeinanderfolgenden dreieckigen Vorsprüngen (18) gebildet wird.

3. Kraftnebenschlußdichtung nach Anspruch 2, bei der die Höhe der dreieckigen Vorsprünge (18) niedriger ist als die Tiefe der Auflagenut (11, 13).

4. Kraftnebenschlußdichtung nach einem der Ansprüche 1 bis 3, bei der die Schneiden (21, 22) als dreieckige Vorsprünge (25, 26) ausgebildet sind, deren Höhe etwa der Tiefe der Auflagenut (11, 13) entspricht.

5. Kraftnebenschlußdichtung nach einem der Ansprüche 2 bis 4, bei der die die Bodenfläche der Auflagenut (11, 13) bzw. die Schneiden (21, 22) bildenden dreieckigen Vorsprünge (18) bzw. (25, 26) einen gleichschenkligen rechtwinkligen Querschnitt mit dem rechten Winkel an der freien Spitze aufweisen.

6. Kraftnebenschlußdichtung nach einem der Ansprüche 1 bis 5, bei der die Breite der Auflagenut (11, 13) bzw. der Dichtmaterialauflage (14, 15) weniger als 50 % der Breite der Kraftnebenschlußdichtung (2) beträgt.

7. Kraftnebenschlußdichtung nach Anspruch 6, bei der die Breite der Auflagenut (11, 13) bzw. der Dichtmaterialauflage (14, 15) ca. 31,25 % der Breite der Kraftnebenschlußdichtung (2) beträgt.

8. Kraftnebenschlußdichtung nach Anspruch 6, bei der die Breite der Auflagenut (11, 13) bzw. der Dichtmaterialauflage (14, 15) ca. 30 % der Breite der Kraftnebenschlußdichtung (2) beträgt.

9. Kraftnebenschlußdichtung nach einem der Ansprüche 1 bis 8, bei der die Kraftnebenschlußdichtung (2) einen vom Hartmaterialprofil (9) radial auswärts vorragenden Zentrierrand (27) aufweist, dessen Außendurchmesser dem Abstand einander diametral gegenüberliegender Schrauben (7, 8) der Flansch- bzw. Rohrleitungsverbindung (1) entspricht..

10. Kraftnebenschlußdichtung nach Anspruch 9, die Zentrierhaken (28, 29) aufweist, die vom Außenumfang des Zentrierrands (27) radial auswärts vorstehen und eine Außenkante (30) der Flansch- bzw. Rohrleitungsverbindung (1) umgreifen.

11. Kraftnebenschlußdichtung nach einem der Ansprüche 1 bis 10, bei der jede Dichtmaterialauflage (14, 15) vor der Montage der Flansch- bzw. Rohrleitungsverbindung (1) soweit aus der Auflagenut (11, 12) vorsteht, daß sie nach der Montage der Flansch- bzw. Rohrleitungsverbindung (1) vollständig in der Auflagenut (11, 13) angeordnet ist und ihr volles Rückfederungsvermögen aufweist und jede Dichtleiste (4, 6) der Flansch- bzw. Rohrleitungsverbindung (1) am Hartmaterialprofil (9) anliegt.

12. Kraftnebenschlußdichtung nach einem der Ansprüche 1 bis 11, bei der das Hartmaterialprofil (9) aus Edelstahl hergestellt ist.

13. Kraftnebenschlußdichtung nach einem der Ansprüche 1 bis 12, bei der die Dichtmaterialauflage (14, 15) aus Graphit ausgebildet ist.

14. Kraftnebenschlußdichtung nach Anspruch 13, bei der das Graphit eine Reinheit von mindestens 99,8 % bei einem Aschegehalt von maximal 0,2 %, einem Chloridanteil von maximal 20 ppm und einem Summenanteil von Chlor und Fluor von maximal 100 ppm aufweist.

15. Kraftnebenschlußdichtung nach Anspruch 13 oder 14, bei der die Ausgangs-Rohdichte des Graphits ca. 1,0 g/cm3 beträgt.

16. Kraftnebenschlußdichtung nach einem der Ansprüche 6 bis 12, bei der die Dichtmaterialauflage (14, 15) aus einem asbestfreien Faserverbundwerkstoff, aus einem PTFE-Werkstoff oder aus einer Werkstoffmischung auf Glimmerbasis ausgebildet ist.

17. Kraftnebenschlußdichtung nach Anspruch 16, bei der die Dichtmaterialauflage (14, 15) aus einem kautschukgebundenen Faserverbundwerkstoff, z.B. aus Aramidfaser-NBR-gebunden, Synthetikfaser-NBR-gebunden, Carbonfaser-NBR-gebunden oder Glasfaser-NBR-gebunden, ausgebildet ist.

18. Kraftnebenschlußdichtung nach Anspruch 17, bei der als Stahlarmierung o.dgl. ausgebildete Abwandlungen der Aramid-,Synthetik-, Carbon- oder Glasfaser als Werkstoff vorgesehen sind.

19. Kraftnebenschlußdichtung nach Anspruch 16, bei der die Dichtmaterialauflage aus FEP ausgebildet ist.

20. Kraftnebenschlußdichtung nach Anspruch 16, bei der die Werkstoffmischung auf Glimmerbasis einen Mineralanteil von zumindest 90 % und einen Bindemittelgehalt von maximal 10 % aufweist.

21. Kraftnebenschlußdichtung nach einem der Ansprüche 1 bis 20, die doppelt oder mehrfach ausgeführt ist.

## Claims

1. Force-shunting seal for sealing flange or pipe connections (1), having a section (9) which is made of hard material and whose cross-section exhibits a support groove (11, 13) on each of the sealing surfaces (10, 12) facing the sealing strips (4, 6) of the flange or pipe connection (1), and having sealing material seats (14, 15), one of which is accommodated in each support groove (11, 13) of the section (9) of hard material, wherein a cutting edge (22, 21) is formed on the inner side wall (20) and/or on the outer side wall (19) of at least one, preferably of each, support groove (11, 13), **characterised in that**, during assembly of the flange or pipe connection (1) and the force-shunting seal (2), excess material can be removed from the sealing material seat (14, 15) by means of the cutting edge (22, 21), and **in that** a receiving channel (24, 23) is associated with the cutting edge (22, 21) on its side remote from the support groove (11, 13), in which receiving channel (24, 23) the excess material removed from the sealing material seat (14, 15) can be received.

2. Force-shunting seal according to claim 1, in which the bottom surface of the support groove (11, 13) is formed by successive triangular projections (18) in the direction of the width of the support groove (11, 13).

3. Force-shunting seal according to claim 2, in which the height of the triangular projections (18) is less than the depth of the support groove (11, 13).

4. Force-shunting seal according to any one of claims 1 to 3, in which the cutting edges (21, 22) are in the form of triangular projections (25, 26) whose height corresponds approximately to the depth of the support groove (11, 13).

5. Force-shunting seal according to any one of claims 2 to 4, in which the triangular projections (18) and (25, 26) forming the bottom surface of the support groove (11, 13) and the cutting edges (21, 22), respectively, have an isosceles-rectangular cross-section with a right angle at the free tip.

6. Force-shunting seal according to any one of claims 1 to 5, in which the width of the support groove (11, 13), or of the sealing material seat (14, 15), is less than 50 % of the width of the force-shunting seal (2).

7. Force-shunting seal according to claim 6, in which the width of the support groove (11, 13), or of the sealing material seat (14, 15), is about 31.25 % of the width of the force-shunting seal (2).

8. Force-shunting seal according to claim 6, in which the width of the support groove (11, 13), or of the sealing material seat (14, 15), is about 30 % of the width of the force-shunting seal (2).

9. Force-shunting seal according to any one of claims 1 to 8, in which the force-shunting seal (2) has a centring edge (27) which projects radially outwards from the section (9) of hard material and the outside diameter of which corresponds to the distance between diametrically opposite screws (7, 8) of the flange or pipe connection (1).

10. Force-shunting seal according to claim 9, having centring hooks (28, 29) which project radially outwards from the outer circumference of the centring edge (27) and engage an outside edge (30) of the flange or pipe connection (1).

11. Force-shunting seal according to any one of claims 1 to 10, in which each sealing material seat (14, 15), before assembly of the flange or pipe connection (1), projects from the support groove (11, 12) to such an extent that, after assembly of the flange or pipe connection (1), it is arranged entirely in the support groove (11, 13) and exhibits its full resilient capacity, and each sealing strip (4, 6) of the flange or pipe connection (1) abuts the section (9) of hard material.

12. Force-shunting seal according to any one of claims 1 to 11, in which the section (9) of hard material is produced from stainless steel.

13. Force-shunting seal according to any one of claims 1 to 12, in which the sealing material seat (14, 15) is made of graphite.

14. Force-shunting seal according to claim 13, in which the graphite has a purity of at least 99.8 % with an ash content of not more than 0.2 %, a chloride content of not more than 20 ppm and a total content of chlorine and fluorine of not more than 100 ppm.

15. Force-shunting seal according to claim 13 or 14, in which the initial apparent density of the graphite is about 1.0 g/cm³.

16. Force-shunting seal according to any one of claims 6 to 12, in which the sealing material seat (14, 15) is made of an asbestos-free fibre reinforced material, of a PTFE material or of a mixture of materials based on mica.

17. Force-shunting seal according to claim 16, in which the sealing material seat (14, 15) is made of a rubber-bonded fibre reinforced material, for example of NBR-bonded aramid fibres, NBR-bonded synthetic fibres, NBR-bonded carbon fibres or NBR-bonded glass fibres.

18. Force-shunting seal according to claim 17, in which modifications of the aramid, synthetic, carbon or glass fibres in the form of steel reinforcement or the like are provided as the material.

19. Force-shunting seal according to claim 16, in which the sealing material seat is made of FEP.

20. Force-shunting seal according to claim 16, in which the mixture of materials based on mica has a mineral content of at least 90 % and a binder content of not more than 10 %.

21. Force-shunting seal according to any one of claims 1 to 20, of which there are two or more.

## Revendications

1. Joint à shuntage de force pour l'étanchéité de liaisons par brides ou de raccords de tuyauterie (1), avec un profilé (9) en un matériau dur, dont le profil en section transversale comporte une gorge (11, 13) aménagée dans chacune des faces d'étanchéité (10, 12) tournées vers les surfaces d'étanchéité (4, 6) des brides, et avec des garnitures (14, 15) en un matériau d'étanchéité, qui sont disposées dans chacune des gorges (11, 13) du profilé (9) en matériau dur, une arête (22, 21) étant aménagée sur la paroi latérale (19) intérieure et/ou extérieure d'au moins une gorge, de préférence de chaque gorge (11, 13), **caractérisé en ce qu'**à l'aide de l'arête (22, 21), lors de l'assemblage de la liaison par bride ou du raccord de tuyauterie (1) avec le joint à shuntage de force (2), le matériau en excès de la garniture d'étanchéité (14, 15) peut être séparé de la garniture d'étanchéité (14, 15), et **en ce qu'**un sillon récepteur (24, 23), dans lequel le matériau en excès séparé de la garniture d'étanchéité (14, 15) peut être recueilli, est associé à l'arête (22, 21), sur la face de celle-ci éloignée de la gorge (11, 13).

2. Joint à shuntage de force selon la revendication 1, dans lequel le fond de gorge (11, 13) est formé de saillies (18) triangulaires disposées l'une à la suite de l'autre dans la direction de la largeur de la gorge (11, 13).

3. Joint à shuntage de force selon la revendication 2, dans lequel la hauteur des saillies (18) triangulaires est inférieure à la profondeur de la gorge (11, 13).

4. Joint à shuntage de force selon une des revendications 1 à 3, dans lequel les arêtes (21, 22) sont conformées en saillies (25, 26) triangulaires, dont la hauteur correspond sensiblement à la profondeur de la gorge (11, 13).

5. Joint à shuntage de force selon une des revendications 1 à 4, dans lequel les saillies triangulaires (18) ou (25, 26) qui forment le fond de la gorge (11, 13) ou les arêtes (21, 22) présentent une section transversale en triangle rectangle isocèle, avec l'angle droit formant le sommet libre.

6. Joint à shuntage de force selon une des revendications 1 à 5, dans lequel la largeur de la gorge (11, 13) ou de la garniture de matériau d'étanchéité (14, 15) est inférieure à 50% de la largeur du joint à shuntage de force (2).

7. Joint à shuntage de force selon la revendication 6, dans lequel la largeur de la gorge (11, 13) ou de la garniture de matériau d'étanchéité (14, 15) représente environ 31,25% de la largeur du joint à shuntage de force (2).

8. Joint à shuntage de force selon la revendication 6, dans lequel la largeur de la gorge (11, 13) ou de la garniture de matériau d'étanchéité (14, 15) représente environ 30% de la largeur du joint à shuntage de force (2).

9. Joint à shuntage de force selon une des revendications 1 à 8, dans lequel le joint à shuntage de force (2) présente un bord de centrage (27) qui dépasse radialement vers l'extérieur par rapport au profilé en matériau dur (9) et dont le diamètre extérieur correspond à la distance entre des vis (7, 8) diamétralement opposées de la liaison par brides ou du raccord de tuyauterie (1).

10. Joint à shuntage de force selon la revendication 9, présentant des crochets de centrage (28, 29) qui font saillie radialement vers l'extérieur à partir de la surface extérieure du bord de centrage (27) et s'accrochent sur une arête extérieure (30) de la liaison par brides ou du raccord de tuyauterie (1).

11. Joint à shuntage de force selon une des revendications 1 à 10, dans lequel chaque garniture d'étanchéité (14, 15), avant le montage de la liaison par brides ou du raccord de tuyauterie (1), dépasse hors de la gorge (11, 13) de telle sorte qu'après le montage de la liaison par brides ou du raccord de tuyauterie (1), elle soit entièrement logée dans la gorge (11, 13), présente sa pleine capacité de retour élastique et s'applique contre chacune des surfaces d'étanchéité (4, 6) de la liaison par brides ou du raccord de tuyauterie (1).

12. Joint à shuntage de force selon une des revendications 1 à 11, dans lequel le profilé en matériau dur (9) est réalisé en acier spécial.

13. Joint à shuntage de force selon une des revendications 1 à 12, dans lequel la garniture d'étanchéité (14, 15) est en graphite.

14. Joint à shuntage de force selon la revendication 13, dans lequel le graphite présente une pureté d'au moins 99,8% pour une teneur en cendres de 0,2% maximum, une teneur en chlorures de 20 ppm maximum et une teneur globale en chlore et fluor de 100 ppm maximum.

15. Joint à shuntage de force selon la revendication 13 ou 14, dans lequel la densité brute d'origine du graphite est d'environ 1,0 g/cm³.

16. Joint à shuntage de force selon une des revendications 6 à 12, dans lequel la garniture d'étanchéité (14, 15) est constituée d'un matériau composite à base de fibres, sans amiante, d'un PTFE ou d'un mélange de matériaux à base de mica.

17. Joint à shuntage de force selon la revendication 16, dans lequel la garniture d'étanchéité (14, 15) est constituée d'un matériau composite à base de fibres à liant caoutchouc, par exemple à base de fibres aramides à liant NBR, de fibres synthétiques à liant NBR, de fibres de carbone à liant NBR ou de fibres de verre à liant NBR,

18. Joint à shuntage de force selon la revendication 17, dans lequel il est prévu comme armure en acier ou similaire des formes de fibres aramides, de fibres synthétiques, de fibres de carbone ou de fibres de verre.

19. Joint à shuntage de force selon la revendication 16, dans lequel la garniture d'étanchéité (14, 15) est en FEP.

20. Joint à shuntage de force selon la revendication 16, dans lequel le mélange à base de mica présente une proportion de minéraux d'au moins 90% et une teneur en liant de 10% maximum.

21. Joint à shuntage de force selon une des revendications 1 à 20, qui réalisé en double ou plus.
